# EUROPÄISCHE PATENTSCHRIFT

(11) **EP 1 079 266 B1**
(45) Veröffentlichungstag und Bekanntmachung des Hinweises auf die Patenterteilung: **28.04.2010**
(21) Anmeldenummer: 99116443.5
(22) Anmeldetag: 21.08.1999
(51) Int. Cl.: G02F 1/39

(54) **Wellenlängeneinstellbares nichtlineares optisches Element**
Wavelength tunable nonlinear optical element
Élément optique non-linéaire à longueur d'onde réglable

(43) Veröffentlichungstag der Anmeldung: 28.02.2001
(73) Patentinhaber: Deutsches Zentrum für Luft- und Raumfahrt e.V., 51147 Köln (DE)
(72) Erfinder: Brauch, Uwe, 70565 Stuttgart (DE); Opower, Hans, 82152 Krailling (DE); Scholl, Marcus, 5223 Stolberg (DE)
(74) Vertreter: Hoeger, Stellrecht & Partner Patentanwälte

(56) Entgegenhaltungen:
- US-A- 5 434 700
- US-A- 5 912 910
- LU Y -Q ET AL: "FREQUENCY TUNING OF OPTICAL PARAMETRIC GENERATOR IN PERIODICALLY POLED OPTICAL SUPERLATTICE LINBO3 BY ELECTRO-OPTIC EFFECT" APPLIED PHYSICS LETTERS,US,AMERICAN INSTITUTE OF PHYSICS. NEW YORK, Bd. 74, Nr. 1, Seite 123-125 XP000804571 ISSN: 0003-6951
- WATTS D J M ET AL: "ELECTRO-OPTIC TUNING OF THE PHASE MISMATCH IN QUASI-PHASE-MATCHED FREQUENCY DOUBLING WAVEGUIDES" JOURNAL OF APPLIED PHYSICS,US,AMERICAN INSTITUTE OF PHYSICS. NEW YORK, Bd. 79, Nr. 7, Seite 3793-3795 XP000593922 ISSN: 0021-8979

## Beschreibung

Die Erfindung betrifft ein wellenlängeneinstellbares optisches Element für die Datenübertragungstechnik.

Bislang wurde in der Datenübertragungstechnik die Übertragungs-Wellenlänge durch den Sender vorgegeben, welcher eine Lichtwelle mit einer festgelegten Wellenlänge erzeugt hat, mit welcher dann die Übertragung von Information erfolgt ist.

Ein Wechsel der Wellenlänge machte es erforderlich, den jeweiligen Sender auszuwechseln oder über Umwandlung in ein elektrisches Signal einen weiteren Sender mit einer anderen festgelegten Wellenlänge anzusteuern.

Aus der US 5,912,910 ist ein wellenlängeneinstellbares optisches Element gemäß dem Oberbegriff von Anspruch 1 bekannt, welches eine Wellenleiterstruktur umfaßt, die als wellenlängeneinstellbarer optischer parametrischer Oszillator einsetzbar ist, wobei die Wellenleiterstruktur eine fest vorgegebene Geometrie periodisch gepolter Regionen aufweist und die Einstellung durch Variation des Lichtweges durch die Geometrie erfolgt.

Lu,Yan-Qing et. al., Applied Physics Letters 74(1), S. 123 - 125 (1999) offenbart die Frequenzanpassung eines optischen parametrischen Generators in periodisch polarisiertem LiNbO₃ durch Anlegen eines periodischen elektrischen Feldes.

Die US 5,434,700 offenbart ein wellenlängeneinstellbares optisches Element, welches als wellenlängeneinstellbarer optischer parametrischer Oszillator einsetzbar ist, wobei in einer Wellenleiterstruktur eine periodische Struktur durch akustische Wellen erzeugt wird, welche nichtlineare Variationen der optischen Suszeptibilität des verwendeten Materials erzeugen, so dass die Perioden der Struktur durch Einstellung der Frequenz der akustischen Wellen variierbar ist.

Der Erfindung liegt ausgehend von der US 5,912,910 die Aufgabe zugrunde, ein einfach wellenlängeneinstellbares optisches Element für die Datenübertragungstechnik zu schaffen.

Diese Aufgabe wird bei einem wellenlängeneinstellbaren optischen Element für die Datenübertragungstechnik, umfassend eine als optische parametrische Einrichtung mit Quasiphasenanpassung ausgebildete Wellenleiterstruktur, welche dazu ausgebilder ist, in der parametrischen Einrichtung miteinander wechselwirkende Lichtwellen zu führen, wobei die optische parametrische Einrichtung hinsichtlich der Wellenlänge der miteinander wechselwirkenden Lichtwelleneinstellbar ist, und wobei die Quasiphasenanpassung durch eine in ein Material der Wellenleiterstruktureingeprägte periodische Gitterstruktur in der Wellenleiterstruktur erfolgt, welche in Wellenleiterrichtung aufeinanderfolgende Bereiche mit variierenden nichtlinearen optischen Eigenschaften aufweist, erfindungsgemäß dadurch gelöst dass die Ausdehnung der Gitterstruktur in Wellenleiterrichtung durch ein mit der Wellenleiterstruktur mechanisch gekoppeltes Piezoelement einstellbar ist und dass eine Steuereinrichtung vorgesehen ist, mit welcher eine den gewünschten Wellenlängen der miteinander wechselwirkenden Lichtwellen entsprechende Spannung für das Piezoelement erzeugbar ist.

Der Vorteil der erfindungsgemäßen Lösung ist somit darin zu sehen, dass durch die mit dem Piezoelement einstellbaren optische parametrische Einrichtung die Möglichkeit geschaffen wurde, ausgehend von einer Lichtwelle eine weitere Lichtwelle mit einstellbarer Wellenlänge zu erzeugen. So sind in besonders vorteilhafter Weise optische Schalter und/oder Router herstellbar.

Unter einer mechanischen Kopplung von Piezoelement und Wellenleiterstruktur ist dabei auch der Extremfall zu verstehen, dass beide identisch sind.

Dadurch, dass erfindungsgemäß die Quasiphasenanpassung in der Wellenleiterstruktur durch eine Gitterstruktur mit periodisch variierenden nichtlinearen optischen Eigenschaften erfolgt und dass die Ausdehnung der Gitterstruktur, d.h. die Ausdehnung der Periodenlänge der Gitterstruktur in der Wellenleiterrichtung mit dem Piezoelement einstellbar ist, ist in besonders einfacher Weise die Möglichkeit geschaffen, die gewünschte Wellenlänge über das Piezoelement einzustellen.

Die Gitterstruktur ist dabei erfindungsgemäß in ein Material der Wellenleiterstruktur eingeprägt, so dass eine Variation der Ausdehnung der Wellenleiterstruktur in Wellenleiterrichtung ebenfalls zur Folge hat, dass auch die Gitterstruktur in Wellenleiterrichtung eine Variation der Ausdehnung erfährt.

Eine besonders vorteilhafte Variante der Erzeugung einer derartigen Gitterstruktur für die Quasiphasenanpassung sieht vor, dass die Gitterstruktur durch eine elektrische Polarisation des die Wellenleiterstruktur bildenden Materials hergestellt ist.

Eine andere oder eventuell auch ergänzend hierzu vorgesehene Lösung sieht vor, dass die Gitterstruktur durch Eindiffusion von Stoffen in das die Wellenleiterstruktur bildende Material hergestellt ist.

Da die Gitterstruktur erfindungsgemäß in die Wellenleiterstruktur eingeprägt ist, wäre es prinzipiell ausreichend, wenn das Piezoelement auf die Wellenleiterstruktur als Ganzes wirkt. Besonders effizient lässt sich die Wellenlängeneinstellung dann vornehmen, wenn das Piezoelement unmittelbar auf den die Gitterstruktur aufweisenden Bereich der Wellenleiterstruktur wirkt, da in diesem Fall sichergestellt ist, dass aufgrund der unmittelbaren Einwirkung, beispielsweise durch direkte mechanische Verbindung mit diesem die Gitterstruktur erfolgt.

Hinsichtlich der Ausbildung der Wellenleiterstruktur sind die unterschiedlichsten Möglichkeiten denkbar. Beispielsweise wäre es denkbar, die Wellenleiterstruktur durch ein Stück optische Faser zu bilden, wobei diese optische Faser dann mit der Gitterstruktur für die Quasiphasenanpassung zu versehen ist.

Besonders einfach läßt sich dies dann erreichen, wenn die als parametrischer Oszillator mit Quasiphasenanpassung wirkende Wellenleiterstruktur in einem Substratkörper angeordnet ist.

In einem derartigen Substratkörper läßt sich einerseits die Wellenleiterstruktur vorteilhaft realisieren und andererseits läßt sich in einem derartigen Substratkörper auch noch die Quasiphasenanpassung durch eine eingeprägte Gitterstruktur vorteilhaft realisieren.

Um nun eine möglichst gute Verbindung zwischen dem Piezoelement und der Wellenleiterstruktur zu erhalten, ist vorzugsweise vorgesehen, daß die Wellenleiterstruktur und das Piezoelement einen zusammenhängenden Substratkörper aufweisen, so daß durch eine Variation der Ausdehnung des Substratkörpers in Wellenleiterrichtung auch eine Variation der Ausdehnung der Gitterstruktur in der Wellenleiterstruktur in Wellenleiterrichtung möglich ist.

Besonders günstig läßt sich dies dadurch realisieren, daß der Substratkörper aus einem piezoelektrischen Material ist und zumindest mit einem Teilbereich einen piezoaktiven Körper des Piezoelements bildet, so daß durch Anlegen eines den piezoaktiven Körper durchsetzenden Feldes die Variation der Ausdehnung der Wellenleiterstruktur in Wellenleiterrichtung realisierbar ist.

Eine besonders vorteilhafte Möglichkeit der Realisierung eines derartigen optischen Elements sieht vor, daß der den piezoaktiven Körper bildende Teilbereich des Substratkörpers Elektroden des Piezoelements trägt. Damit ist in besonders vorteilhafter Weise ein erfindungsgemäßes wellenlängeneinstellbares optisches Element erzeugbar, nämlich durch einen einzigen Substratkörper, in welchem die Wellenleiterstruktur vorgesehen ist und welcher außerdem noch den piezoaktiven Körper des Piezoelements trägt, wobei die Bildung des Piezoelements lediglich durch Aufbringen von Elektroden auf den den piezoaktiven Körper bildenden Teilbereich des Substratkörpers realisierbar ist.

Ein derartiger zusammenhängender Substratkörper kann unterschiedlich ausgebildet sein. Eine Möglichkeit sieht vor, daß der Substratkörper insgesamt plattenförmig ausgebildet ist.

Es ist aber auch denkbar, den Substratkörper als Mesastruktur auszubilden.

Prinzipiell wäre ein derartiger zusammenhängender Substratkörper auch aus mehreren, miteinander verbundenen Kristallmaterialien herstellbar, so daß beispielsweise der die Wellenleiterstruktur aufnehmende Teilbereich des Substratkörpers aus einem anderen Material hergestellt sein kann als der den piezoaktiven Körper bildende Teilbereich.

Eine besonders günstige Lösung sieht vor, daß der Substratkörper als einstückiger Körper ausgebildet ist.

Eine andere vorteilhafte Möglichkeit der erfindungsgemäßen Lösung sieht vor, daß das Piezoelement und die Wellenleiterstruktur getrennte, mechanisch miteinander gekoppelte Elemente sind.

Diese Lösung hat den großen Vorteil, daß das Material für die Wellenstruktur und das Material für das Piezoelement, insbesondere den piezoaktiven Körper, unterschiedlich gewählt werden können und somit die jeweils für die entsprechende Funktion geeignetsten Materialien eingesetzt werden können.

Besonders günstig ist es hierbei, wenn die Wellenleiterstruktur mindestens endseitig, d.h. im Bereich von deren Enden mit dem Piezoelement gekoppelt ist.

Eine besonders günstige Lösung sieht vor, daß der die Wellenleiterstruktur aufweisende Substratkörper mechanisch mit dem Piezoelement verbunden ist.

Eine derartige mechanische Verbindung kann dabei in unterschiedlicher Art und Weise realisiert werden. So sieht ein vorteilhaftes Ausführungsbeispiel vor, daß die Wellenleiterstruktur über ihre Erstreckung in Wellenleiterrichtung mechanisch mit dem Piezoelement verbunden ist, so daß eine Verbindung zwischen der Wellenleiterstruktur und dem Piezoelement jeweils über deren gesamte Länge in Wellenleiterrichtung besteht.

Dabei kann dann, wenn die Wellenleiterstruktur und das Piezoelement getrennte Elemente sind, das Piezoelement beispielsweise ebenfalls als Platte ausgebildet sein, auf welcher der beispielsweise ebenfalls plattenförmig ausgebildete Substratkörper aufliegt. Alternativ dazu ist es aber auch denkbar, daß das Piezoelement einen Stapel von Piezozellen umfaßt, welcher sich in Wellenleiterrichtung erstreckt. Damit besteht die Möglichkeit, beispielsweise dünne piezoaktive Körper in Wellenleiterrichtung aufeinander zu stapeln und somit eine für die Variation der Ausdehnung der Wellenleiterstruktur in Wellenleiterrichtung besonders effiziente Lösung zu erhalten.

Im Zusammenhang der bislang erläuterten Ausführungsbeispiele wurde lediglich darauf eingegangen, daß mindestens ein Piezoelement vorgesehen ist, welches auf die Wellenleiterstruktur oder Gitterstruktur einwirkt.

Dabei ist bei einem Piezoelement zwangsläufig eine mehr oder weniger einseitige Einwirkung auf die Wellenleiterstruktur vorgegeben.

Besonders günstig ist es daher, wenn zwei Piezoelemente von gegenüberliegenden Seiten auf die Wellenleiterstruktur einwirken um somit einerseits eine Deformation der Piezoelemente zu verhindern und somit andererseits möglichst symmetrisch auf die Wellenleiterstruktur zur Variation der Ausdehnung derselben einzuwirken.

Hinsichtlich der Wellenlängen für die Lichtwellen wurden im Zusammenhang mit der bisherigen Erläuterung der einzelnen Ausführungsbeispiele keine näheren Angaben gemacht. So sieht eine vorteilhafte Lösung vor, daß von den in der parametrischen Einrichtung miteinander wechselwirkenden Lichtwellen, welche die Signalwelle, die Idlerwelle und die Summenfrequenzwelle sind, mindestens die Signalwelle in einem für optische Datenübertragungsnetze geeigneten Wellenlängenbereich liegt. Damit ergeben sich auch die anderen Wellenlängen je nach Einsatzbereich.

Eine besonders günstige Lösung für ein erfindungsgemäßes optisches Element sieht vor, daß von den miteinander wechselwirkenden Lichtwellen die Summenfrequenzwelle bei einer mit Halbleiterlasern direkt erzeugbaren Wellenlänge liegt. Derartige mit Halbleiterlasern direkt erzeugbare Wellenlängen sind beispielsweise Wellenlängen im Bereich von 700 bis 1000 Nanometer, vorzugsweise Wellenlängen in der Größenordnung von 750 oder 980 Nanometer.

Ein weiteres vorteilhaftes Ausführungsbeispiel der erfindungsgemäßen Lösung sieht vor, daß von den miteinander wechselwirkenden Lichtwellen die Idlerwelle außerhalb des für Datenübertragungsnetze geeigneten Wellenlängenbereichs liegt. Diese Lösung hat den Vorteil, daß dadurch automatisch eine Übertragung der Idlerwelle aufgrund der optischen Eigenschaften der Datenübertragungsnetze selbst unterdrückt wird.

Es ist aber auch denkbar, daß die Idlerwelle innerhalb eines für Datenübertragungsnetze geeigneten Wellenlängenbereichs liegt. In diesem Fall kann beispielsweise die Idlerwelle und die Signalwelle dazu eingesetzt werden, wieder die Summenfrequenzwelle ebenfalls mit einer parametrischen Einrichtung zu erzeugen.

Ferner wurde bislang nicht im einzelnen darauf eingegangen, wie beispielsweise bei vorgegebener Summenfrequenzwelle die Signalwelle günstigerweise erzeugbar ist.

So sieht ein vorteilhaftes erfindungsgemäßes optisches wellenlängeneinstellbares Element vor, daß die parametrische Einrichtung in einem ersten optischen Resonator für die Signalwelle angeordnet ist. Ein derartiger erster optischer Resonator für die Signalwelle erlaubt es, die Ausbildung der Signalwelle zu begünstigen, so daß auch bei relativ kleinen Leistungen der Summenfrequenzwelle, die gewünschte Signalwelle anschwingt.

Eine weitere noch vorteilhafter ausgebildete Lösung sieht vor, daß die parametrische Einrichtung in einem zweiten optischen Resonator für die Idlerwelle angeordnet ist, so daß das Anschwingen der Idlerwelle durch den zweiten Resonator begünstigt wird.

Dabei kann der optische Resonator innerhalb der Wellenleiterstruktur, beispielsweise durch in diese eingebrachte Bragg-Gitter, realisiert werden.

Es ist aber auch denkbar, die Wellenleiterstruktur innerhalb des Resonators anzuordnen, beispielsweise dadurch, daß die Wellenleiterstruktur endseitig mit reflektierenden Schichten versehen wird.

Derartige reflektierte Schichten oder Bragg-Gitter sind stets so ausgebildet, daß sie beispielsweise für die Summenfrequenzwelle durchlässig sind.

Darüber hinaus umfaßt die Erfindung auch einen wellenlängeneinstellbaren optischen Sender für die Datenübertragungstechnik, welcher ein optisches wellenlängeneinstellbares Element nach einem der voranstehenden Ausführungsbeispiele und einen mit einer festen Wellenlänge arbeitenden Halbleiterlaser zur Erzeugung einer der in der parametrischen Einrichtung wechselwirkenden Lichtwellen umfaßt.

Ein derartiger optischer Sender zeichnet sich dadurch aus, daß es nicht mehr notwendig ist, für die Erzeugung verschiedener Übertragungswellenlängen verschiedene Halbleiterlaser herzustellen, deren Herstellung aufwendig und kostenintensiv ist, sondern die Erfindung erlaubt es, einen auf einer festen Wellenlänge arbeitenden Halbleiterlaser zu verwenden und die Wellenlängeneinstellbarkeit durch ein erfindungsgemäßes optisches wellenlängeneinstellbares Element zu erhalten, wobei das wellenlängeneinstellbare Element nicht nur die Einstellbarkeit der Wellenlänge für die Datenübertragung gewährleistet, sondern auch den Vorteil hat, daß der Halbleiterlaser bei einer für Halbleiterlaser günstigen direkt erzeugbaren Wellenlänge arbeiten kann und diese dann auf eine für Datenübertragungsnetze günstige Wellenlänge umgesetzt werden kann.

Mit derartigen wellenlängeneinstellbaren optischen Sendern lassen sich in besonders günstiger Weise vielfältige kommunikationstechnische Aufgabestellungen optisch lösen. Beispielsweise läßt sich ein derartiger Sender aufgrund der Wellenlängeneinstellbarkeit der Signalwelle, welche letztlich von dem Datenübertragungsnetz übertragen wird, so betreiben, daß mit diesem auf jeweils eine feste Übertragungswellenlänge eingestellte Empfänger wahlweise angesprochen werden können, um diesen Empfängern gezielt Daten zu übermitteln.

Darüber hinaus betrifft die Erfindung auch noch einen wellenlängeneinstellbaren Wellenlängenumsetzer für die Datenübertragungstechnik, welcher einen mit einem ersten optischen Datenübertragungsnetz in Verbindung stehenden Frequenzumsetzer zur Erzeugung einer Summenfrequenzwellenlänge und ein die Summenfrequenzwellenlänge empfangendes optisches wellenlängeneinstellbares Element entsprechend den voranstehenden Ausführungsbeispielen zur Erzeugung der gewünschten einstellbaren zweiten Übertragungs-Wellenlänge umfaßt.

Mit einem derartigen erfindungsgemäßen Wellenlängenumsetzer läßt sich eine Übertragungs-Wellenlänge auf rein optischem Wege in eine andere Übertragungs-Wellenlänge umsetzen, und zwar noch einstellbar, so daß durch Ändern der einstellbaren Übertragungs-Wellenlänge ebenfalls unterschiedliche Empfänger angesprochen werden können, obwohl das ankommende Signal mit einer bestimmten oder einstellbaren Übertragungs-Wellenlänge ankommen kann.

Besonders günstig ist es dabei, wenn der Frequenzumsetzer ebenfalls noch als optisches wellenlängeneinstellbares Element ausgebildet ist, so daß die ankommende Übertragungswellenlänge die Signalwellenlänge darstellt und das optisch einstellbare Element aus der Signalwelle die Summenfrequenzwelle erzeugt.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: ein erstes Ausführungsbeispiel eines erfindungsgemäßen optischen wellenlängeneinstellbaren Elements;
- Fig. 2: eine schematische Darstellung der in der optischen parametrischen Einrichtung direkt übereinanderlaufenden und miteinander wechselwirkenden Lichtwellen;
- Fig. 3: eine schematische Darstellung eines zweiten Ausführungsbeispiel eines erfindungsgemäßen optischen Elements;
- Fig. 4: eine schematische Darstellung eines dritten Ausführungsbeispiels eines erfindungsgemäßen optischen Elements;
- Fig. 5: eine schematische Darstellung eines vierten Ausführungsbeispiels eines erfindungsgemäßen optischen Elements;
- Fig. 6: eine schematische Darstellung eines fünften Ausführungsbeispiels eines erfindungsgemäßen optischen Elements;
- Fig. 7: eine schematische Darstellung eines sechsten Ausführungsbeispiels eines erfindungsgemäßen optischen Elements;
- Fig. 8: eine schematische Darstellung eines siebten Ausführungsbeispiels eines erfindungsgemäßen optischen Elements;
- Fig. 9: eine schematische Darstellung eines Datenübertragungsnetzes mit wellenlängeneinstellbaren optischen Sendern unter Verwendung von erfindungsgemäßen optischen Elementen;
- Fig. 10: ein Kommunikationsnetzwerk mit erfindungsgemäßen optischen Sendern entsprechend Fig. 9 und
- Fig. 11: eine schematische Darstellung eines erfindungsgemäßen wellenlängeneinstellbaren Wellenlängenumsetzers unter Verwendung eines erfindungsgemäßen optisch einstellbaren Elements.

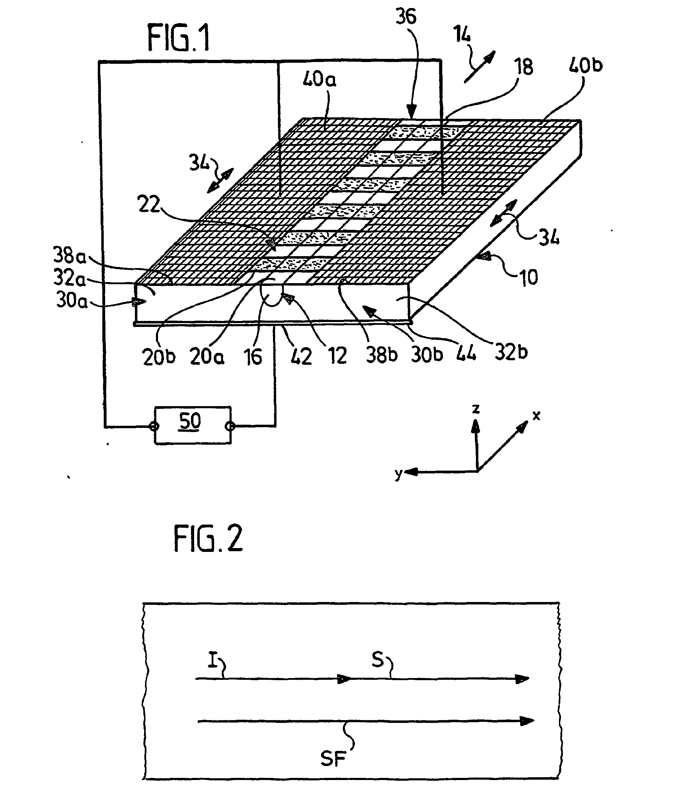

Ein erstes Ausführungsbeispiel eines erfindungsgemäßen optischen wellenlängeneinstellbaren Elements, dargestellt in Fig. 1, umfaßt einen als Ganzes mit 10 bezeichneten Substratkörper, in welchem eine Wellenleiterstruktur 12, beispielsweise durch geeignetes Dotieren des Substratkörpers 10, vorgesehen ist, welches sich in einer Wellenleiterrichtung 14 in dem Substratkörper 12 erstreckt und ein erstes Ende 16 und ein zweites Ende 18 aufweist.

Die Wellenleiterstruktur 12 ist dabei als optische parametrische Einrichtung ausgebildet, in welcher, wie in Fig. 2 schematisch dargestellt, drei Lichtwellen, nämlich eine Signalwelle S, eine Idlerwelle I und eine Summenfrequenzwelle SF miteinander wechselwirken und zwar derart, daß die Wellenlänge der Summenfrequenzwelle SF der Summenfrequenz der Signalwelle S und der Idlerwelle I entspricht.

Um die Wirkung einer derartigen parametrischen Einrichtung zu erhalten, ist das Material der Wellenleiterstruktur 12 so zu wählen, daß in diesem ein elektromagnetisches Feld, beispielsweise das durch die Summenfrequenzwelle SF erzeugte elektromagnetische Feld, aufgrund nichtlinearer Polarisierbarkeit des Materials der Wellenleiterstruktur die Signalwelle S und die Idlerwelle I erzeugt, wobei hierzu noch die drei Lichtwellen SF, S und I sich mit im wesentlichen konstanter Phasengeschwindigkeit über einen möglichst langen Weg in der Wellenleiterstruktur 12 ausbreiten müssen. Dies wird durch die Quasiphasenanpassung erreicht, welche durch in der Wellenleiterrichtung 14 in der Wellenleiterstruktur 12 vorgesehene periodisch aufeinanderfolgende Bereiche 20a und 20b erreicht wird, in denen die optischen nichtlinearen Eigenschaften variieren, wobei die Periodizität der Bereiche 20a und 20b so zu wählen ist, daß ein Wellenvektor K einer durch die Bereiche 20a und 20b erzeugten Gitterstruktur 22 der Differenz der Wellenvektoren der Summenfrequenzwelle SF und der Summe aus Signalwelle S und Idlerwelle I entspricht.

Details einer derartigen Quasiphasenanpassung sind dabei in dem Artikel von Fejer, Martin M; Magel, G.A.; Jundt, Dieter H.; Byer, Robert L. mit dem Titel "Quasi-phase-matched second harmonic generation - Tuning and tolerances" in IEEE Journal of Quantum Electronics (ISSN 0018-9197), Vol. 28, No. 11, P. 2631 - 2654, beschrieben.

Die Periodizität der Gitterstruktur 22 ist somit für die Wellenlängen der Lichtwellen verantwortlich, die in der als Wellenleiterstruktur 12 ausgebildeten parametrischen Einrichtung miteinander wechselwirken.

Wird beispielsweise die Summenfrequenzwelle SF hinsichtlich ihrer Wellenlänge vorgegeben, so ist durch die Periodizität der Gitterstruktur 22 die Wellenlänge der sich ausbildenden Signalwelle S und der sich ausbildenden Idlerwelle I festgelegt.

Wird beispielsweise die Signalwelle S vorgegeben, so ist durch die Periodizität der Gitterstruktur 22 die Wellenlänge der sich ausbildenden Idlerwelle I und der sich ausbildenden Summenfrequenzwelle SF vorgegeben.

Um mit der als optische parametrische Einrichtung mit Quasiphasenanpassung arbeitenden Wellenleiterstruktur 12, beispielsweise bei vorgegebener Summenfrequenzwelle SF, die Wellenlänge der Signalwelle S einstellen zu können, bildet der Substratkörper 10 beiderseits der sich in Wellenleiterrichtung 14 erstreckenden Wellenleiterstruktur 12 jeweils einen Teil eines Piezoelements 30a, 30b, und zwar vorzugsweise einen piezoaktiven Körper 32a bzw. 32b des jeweiligen Piezoelements 30a, 30b, welcher sich durch Anlegen eines elektrischen Feldes in einer Dehnungsrichtung 34 ausdehnt, welche ungefähr parallel zur Wellenleiterrichtung 14 der Wellenleiterstruktur 12 verläuft.

Dabei ist der Substratkörper 10 vorzugsweise als plättchenförmiger Körper ausgebildet, durch welchen in einem mittigen Bereich 36 die von einer Oberseite 38 ausgehend sich in den Substratkörper 10 hinein erstreckende Wellenleiterstruktur 12 hindurchverläuft und welcher beiderseits des mittigen Bereichs 36 auf Teilbereichen 38a und 38b der Oberseite 38 erste Elektroden 40a und 40b trägt und auf einer Unterseite 42 eine zweite Elektrode 44, welche beispielsweise durchgehend ausgebildet sein kann und sich somit auch über den mittigen Bereich 36 hinwegerstrecken kann, wobei zwischen den ersten Elektroden 40a und 40b und der zweiten Elektrode 44 jeweils die Bereiche des Substratkörpers 10 liegen, die die piezoaktiven Körper 32a und 32b der Piezoelemente 30a und 30b darstellen.

Die ersten Elektroden 40a und 40b sowie die zweite Elektrode 44 sind mit einer als Ganzes mit 50 bezeichneten Steuereinrichtung verbunden, mit welcher eine Spannung und somit ein die piezoaktiven Körper durchsetzendes elektrische Feld E erzeugbar ist, mit welchem eine Dehnung der piezoaktiven Körper 32a und 32b und somit der Piezoelemente 30a und 30b in der Dehnungsrichtung 34 einstellbar ist.

Dadurch ist der zwischen den Piezoelementen 30a und 30b liegende einstückig mit den piezoaktiven Körpern 32a, b verbundene mittlere Bereich 36, in welchem die Wellenleiterstruktur 12 verläuft, in der Dehnungsrichtung 34 variabel dehnbar und somit ebenfalls die Periodizität der Gitterstruktur 22 in Wellenleiterrichtung 14 variierbar, was wiederum - wie bereits erläutert - eine Einstellbarkeit der Wellenlängen der miteinander wechselwirkenden Lichtwellen SF, S und I zur Folge hat.

Vorzugsweise wird hierbei als Material für den Substratkörper 10 ein Material gewählt, das einen transversalen Piezoeffekt erzeugt und, wie in Fig. 1 durch die Kristallachsenorientierungen X, Y und Z angegeben, bei einem elektrischen Feld in Z-Richtung eine Dehnung in X-Richtung erzeugt, so daß die Dehnungsrichtung 34 parallel zur X-Richtung der Kristallachsen verläuft.

Ferner ist bei dem ersten Ausführungsbeispiel dadurch, daß beiderseits des mittigen Bereichs 36 Piezoelemente 30a und 30b vorgesehen sind, die in Dehnungsrichtung 34 mittels der Steuereinrichtung 50 einstellbar sind, eine im wesentlichen symmetrische Dehnung des mittleren Bereichs 36 des Substratkörpers 10 erreichbar.

Vorzugsweise ist die Gitterstruktur 22 entweder auf die Wellenleiterstruktur 12 oder zumindest auf den mittleren Bereich 36 des Substratkörpers 10 begrenzt, da das Erzeugen der Gitterstruktur 22 sich auch auf die piezoelektrischen Eigenschaften des Substratkörpers 10 auswirken kann und somit dessen Dehnung in der Dehnungsrichtung 34 nachteilig beeinflussen kann, so daß erfindungsgemäß die Bereiche des Substratkörpers 10, die die piezoaktiven Körper 32a und 32b darstellen, frei von der Gitterstruktur 22 sind.

Als Material für den beim ersten Ausführungsbeispiel einzusetzenden Substratkörper wird vorzugsweise LiNbO₃ vorgesehen. Es sind aber auch andere, den transversalen Piezoeffekt zeigende Materialien denkbar.

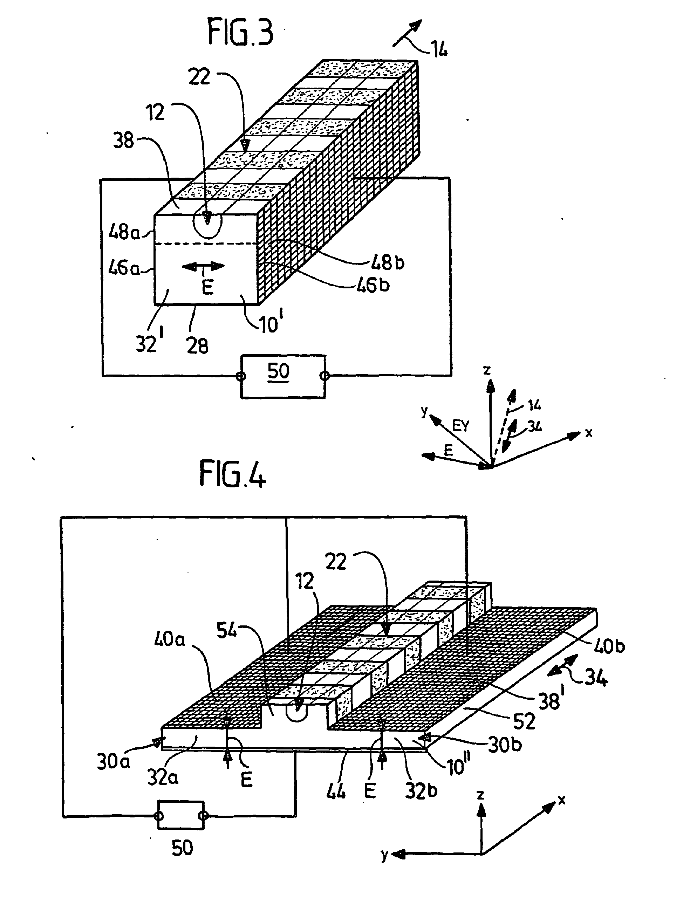

Bei einem zweiten Ausführungsbeispiel eines erfindungsgemäßen optischen Elements, dargestellt in Fig. 3, sind diejenigen Teile, die mit denen des ersten Ausführungsbeispiels identisch sind, mit den selben Bezugszeichen versehen, so daß auf die Beschreibung zum ersten Ausführungsbeispiel vollinhaltlich Bezug genommen werden kann.

Bei dem zweiten Ausführungsbeispiel, dargestellt in Fig. 3, ist der Substratkörper 10' als die im Querschnitt rechteckiger, vorzugsweise ungefähr quadratischer, sich in der Wellenleiterrichtung 14 mit seiner Längsrichtung erstreckender Block ausgebildet, in welchem die Wellenleiterstruktur 12 vorgesehen ist, wobei die Wellenleiterstruktur 12 sich von der Oberseite 38 in den Substratkörper 10' hineinerstreckt.

Ferner erstreckt sich auch die Gitterstruktur 22 im Bereich der Wellenleiterstruktur 12 von der Oberseite 38 in den Substratkörper 10' hinein.

Bei dem zweiten Ausführungsbeispiel ist dabei der Substratkörper 10' im Bereich seiner beiderseits der Oberseite 38 liegenden Seitenflächen 46a, 46b mit Elektroden 48a, 48b versehen, die somit ein quer-, vorzugsweise senkrecht zur Wellenleiterrichtung 14 verlaufendes elektrisches Feld E erzeugen.

Die Kristallachsen X, Y und Z des Substratkörpers 10' sind dabei so orientiert, daß die Z-Richtung senkrecht auf der Oberseite 38 steht, die Y- und X-Richtung in einer zur Oberseite 38 parallelen Ebene liegen und in einem spitzen Winkel zu den Längsseiten 46a und 46b verlaufen.

Das Anlegen des elektrischen Feldes E zwischen den Elektroden 48a und 48b hat zur Folge, daß dieses auch eine Komponente EY in der Y-Richtung der Kristallachse aufweist, die zu einer Dehnung in Y-Richtung der Kristallachse führt, wobei diese Dehnung in Y-Richtung der Kristallachse wiederum eine Komponente in Dehnungsrichtung 34 parallel zur Wellenleiterrichtung 14 aufweist, so daß wiederum trotz des longitudinalen in Y-Richtung der Kristallachsen verlaufenden longitudinalen Piezoeffekts eine Variation der Dehnung in der Dehnungsrichtung 34 parallel zur Wellenleiterrichtung 14 möglich ist, die eine Variation der Dehnung der Gitterstruktur 22 in der Dehnungsrichtung 34 erlaubt und somit eine Abstimmung der miteinander wechselwirkenden Wellenlängen.

Dadurch, daß bei dem zweiten Ausführungsbeispiel die Gitterstruktur 22 sich lediglich von der Oberseite 38 partiell, vorzugsweise über die Tiefe der Wellenleiterstruktur 12 in den Substratkörper 10' hineinerstreckt, ist der durch die Gitterstruktur 22 beeinflußte Volumenanteil des Substratkörpers 10' im Verhältnis zum gesamten Substratkörper 10' vernachlässigbar, wobei der zwischen den Elektroden 48a und 48b und unterhalb der Wellenleiterstruktur 12 liegende Teilbereich des Substratkörpers 10' den piezoaktiven Körper 32' bildet, der sich ausgehend von einer Unterseite 28 des Substratkörpers 10' im wesentlichen bis zur Wellenleiterstruktur 12 erstreckt.

Bei einem dritten Ausführungsbeispiel eines erfindungsgemäßen optischen Elements, dargestellt in Fig. 4, ist der Substratkörper 10" in Form einer Mesastruktur ausgebildet, welche einen plattenförmigen Bereich 52 und einen mittig auf dem plattenförmigen Bereich und über eine Oberseite 38' des plattenförmigen Bereichs 52 überstehenden Stegbereich 54 aufweist, welcher sich über eine Längsrichtung des plattenförmigen Bereichs 52 desselben erstreckt

Der stegförmige Bereich 54 trägt dabei die Wellenleiterstruktur 12 und in diesem ist außerdem die Gitterstruktur 22 ausgebildet, die auch die Wellenleiterstruktur 12 durchsetzt.

Dadurch, daß der Substratkörper 10" außerhalb des Stegbereichs 54 als dünner plattenförmiger Bereich 52 ausgebildet sein kann, besteht die Möglichkeit, mit geringeren elektrischen Spannungen in den zwischen den Elektroden 40a und 40b sowie 44 liegenden piezoaktiven Körpern 32a und 32b ein elektrisches Feld E parallel zur Z-Richtung zu erzeugen, welches für eine ausreichende Variation der Dehnung in der X-Richtung der Kristallachsen und somit in der Dehnungsrichtung 34 sorgt, die auch zu einer Variation der Dehnung des stegförmigen Bereichs 54 und somit zu einer Variation der Dehnung der Gitterstruktur 22 eingesetzt werden kann.

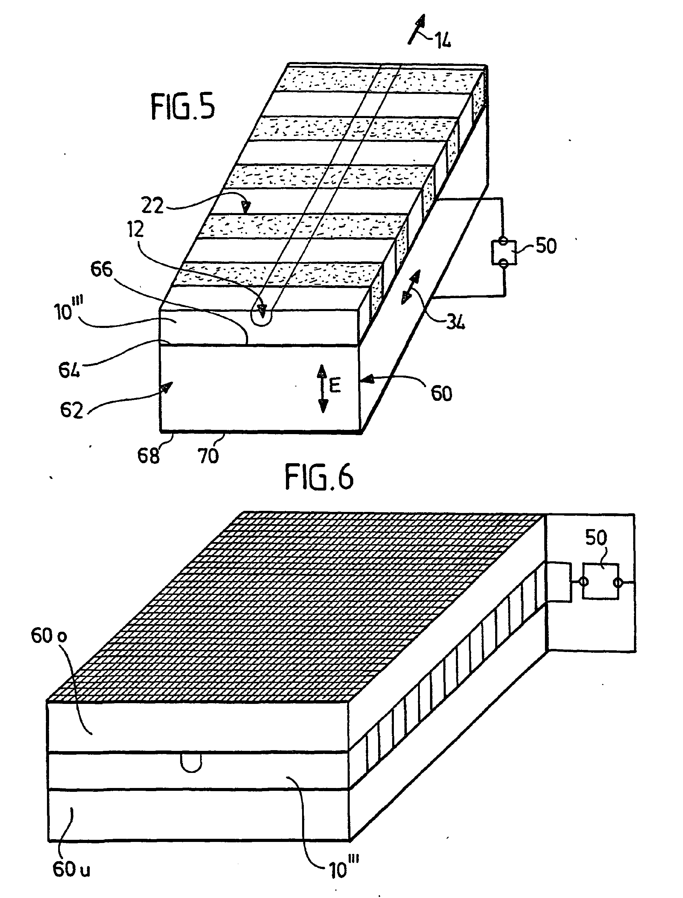

Bei einem vierten Ausführungsbeispiel, dargestellt in Fig. 5, ist der Substratkörper 10'", in welchem die Wellenleiterstruktur 12 und die Gitterstruktur 22 angeordnet sind, in gleicher Weise wie der mittlere Bereich 36 des ersten Ausführungsbeispiels oder der stegförmige Bereich 54 des dritten Ausführungsbeispiels ausgebildet, der Substratkörper 10'" ist jedoch völlig getrennt von dem piezoaktiven Körper 62 des Piezoelements 60.

Der piezoaktive Körper 62 erstreckt sich ungefähr parallel zum Substratkörper 10'" und ist auf einer Oberseite 64 mit einer oberen Elektrode 66 versehen und auf einer Unterseite 68 mit einer unteren Elektrode 70. Beispielsweise sitzt auf der oberen Elektrode 66 der Substratkörper 10'" und liegt über seine gesamte Erstreckung in der Wellenleiterrichtung 14 auf der oberen Elektrode 66 auf und ist außerdem vorzugsweise flächig auf dieser oberen Elektrode 66 fixiert, die ihrerseits wiederum flächig auf dem piezoaktiven Körper 62 fixiert ist.

Unter Ausnützung des transversalen piezoelektrischen Effekts wird durch Erzeugen eines elektrischen Feldes E zwischen den Elektroden 66 und 70 eine Variation der Dehnung in der Dehnungsrichtung 34, die vorzugsweise parallel zur Wellenleiterrichtung 14 verläuft, erzeugt und durch eine Variation der Dehnung des pizeoaktiven Körpers 62 in der Dehnungsrichtung 34 erfolgt auch eine Variation der Dehnung des Substratkörpers 10", der über die Elektrode 66 flächig mit dem piezoaktiven Körper 62 verbunden ist.

Das fünfte Ausführungsbeispiel gemäß Fig. 6 stellt eine Verbesserung des vierten Ausführungsbeispiels dahingehend dar, daß der Substratkörper 10'" zwischen zwei Piezoelementen 60, nämlich einem unteren Piezoelement 60u und einem oberen Piezoelement 60o, liegt, die in gleicher Weise wie das Piezoelement 60 beim vierten Ausführungsbeispiel ausgebildet und parallel von der Steuereinrichtung 50 betrieben sind, so daß die beiden Piezoelemente 60u und 60o symmetrisch auf den zwischen diesen liegenden Substratkörper 10'" einwirken und somit eine Durchbiegung des gemäß dem vierten Ausführungsbeispiel den Substratkörper 10'" einseitig tragenden Piezoelements 60 vermieden wird.

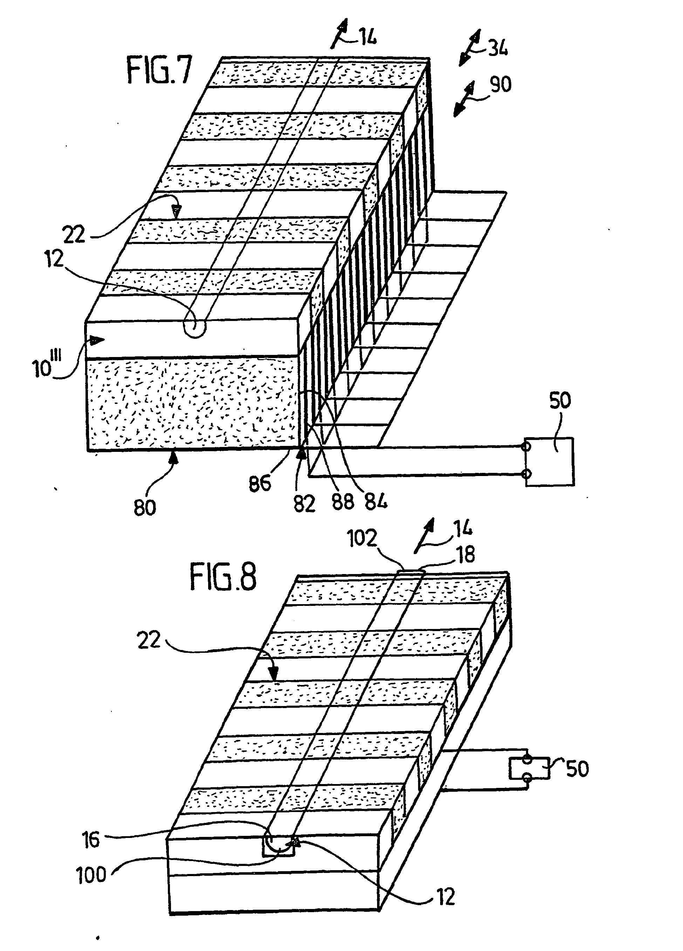

Bei einem sechsten Ausführungsbeispiel, dargestellt in Fig. 7, ist der Substratkörper 10'" in gleicher Weise wie beim vierten und fünften Ausführungsbeispiel mit der Wellenleiterstruktur 12 und der Gitterstruktur 22 versehen.

Allerdings sitzt bei diesem Ausführungsbeispiel der Substratkörper 10'" auf einem Piezoelement 80, welches durch einen Stapel einzelner Piezozellen 82 gebildet ist, von denen jedes einen piezoaktiven Körper 84 in Form eines Plättchens aufweist, das beiderseits mit Elektroden 86 und 88 versehen ist, wobei im Stapel die Elektrode der einen Piezozelle 82 auch die Elektrode der nächstfolgenden Piezozelle ist. Alle Piezozellen werden durch die gemeinsame Steuereinrichtung 50 angesteuert, wobei durch Ausnutzung des longitudinalen Piezoeffekts die Summe der Piezozellen 82 in der Stapelrichtung 90 sich ausdehnt, so daß diese mit der Dehnungsrichtung 34 zusammenfällt, welche parallel zur Wellenleiterrichtung 14 verläuft, so daß aufgrund der dünnen piezoaktiven Körper 84 und der Vielzahl der Piezozellen 82 bereits mit geringen Spannungen eine ausreichende Dehnung des Piezoelements 80 in der Dehnungsrichtung 34 erreichbar ist.

Der Vorteil dieser Lösung ist darin zu sehen, daß aufgrund der Möglichkeit der Verwendung dünner piezoaktiver Körper 84 weit geringere Spannungen einsetzbar sind als bei den übrigen Ausführungsbeispielen, bei welchen der piezoaktive Körper stets, bedingt durch die Ausdehnung der Wellenleiterstruktur 12 und die für die Ausbildung der Wellenleiterstruktur erforderliche Dicke derselben, ebenfalls eine nennenswerte Dicke aufweist.

Außerdem läßt sich bei diesem Ausführungsbeispiel der longitudinale Piezoeffekt einsetzen der zumindest bei Keramiken einen größeren Koeffizienten aufweist als der transversale Piezoeffekt.

Ferner ist, wie beim vierten und fünften Ausführungsbeispiel der Substratkörper 10'" im wesentlichen flächenhaft mit dem Piezoelement 80 verbunden, das sich ebenfalls mindestens über die Ausdehnung des Substratkörpers 10'" in der Wellenleiterrichtung 14 erstreckt.

Der Vorteil bei dem vierten, fünften und sechsten Ausführungsbeispiel gemäß den Fig. 5 bis 7 ist darin zu sehen, daß der Substratkörper 10'" vollkommen getrennt ist von dem piezoaktiven Körper 62 oder 84, so daß jeweils für den Substratkörper 10'" ein anderes Material eingesetzt werden kann als für den piezoaktiven Körper 62 oder 84 und somit das jeweilige Material für diese Körper in Bezug auf die Funktion derselben optimiert werden kann.

Bei einem siebten Ausführungsbeispiel eines erfindungsgemäßen optischen Elements, dargestellt in Fig. 8, wird hinsichtlich der bisher beschriebenen Komponenten und Funktionen derselben vollinhaltlich auf die Ausführungen zum vierten Ausführungsbeispiel und den nachfolgenden Ausführungsbeispielen Bezug genommen.

Im Gegensatz zum vierten Ausführungsbeispiel ist bei dem siebten Ausführungsbeispiel die Wellenleiterstruktur 12 an dem vorderen Ende 16 und dem hinteren Ende 18 jeweils mit einer die Signalwelle S reflektierenden dielektrischen Schicht 100, 102 versehen, und außerdem die Wellenleiterstruktur 12 derart ausgebildet, daß der Abstand der dielektrischen Schichten 100 und 102 in Wellenleiterrichtung 14 einen optischen Resonator für die Signalwelle S bildet.

Die dielektrischen Schichten 100 und 102 sind ferner noch so ausgebildet, daß sie transparent für die Summenfrequenzwelle SF sind, so daß diese keine Beeinflussung erfährt.

Besonders vorteilhaft ist es, wenn die dielektrischen Schichten 100 und 102 auch noch einen Resonator für die Idlerwelle I bilden, so daß auch diese resonant aufgebaut wird.

Damit wird insgesamt der Umwandlungsgrad der parametrischen Einrichtung mit Quasiphasenanpassung erheblich gesteigert.

Die entsprechend dem siebten Ausführungsbeispiel eingesetzte optischen Resonatoren haben dabei vorzugsweise aufgrund des Abstandes der dielektrischen Schichten 100 und 102 eine derartige Vielzahl von nebeneinander liegenden Resonanzfrequenzen, daß bei einer Abstimmung dieses parametrischen Oszillators aufgrund der Veränderung der Gitterstruktur 22 stets wieder eine Resonanzfrequenz für die Signalwelle S oder die Idlerwelle I zur Verfügung steht.

Allen Ausführungsbeispielen des erfindungsgemäßen optischen wellenlängeneinstellbaren Elements ist gemeinsam, daß eine thermische Stabilisierung des die Wellenleiterstruktur 12 tragenden Substratkörpers 10 erforderlich ist, die bei allen gezeigten Ausführungsbeispielen aus Gründen der Übersichtlichkeit nicht dargestellt ist. Die thermische Stabilisierung wird beispielsweise gebildet durch einen Temperierblock, durch welchen vorzugsweise der Substratkörper 10 und auch die piezoaktiven Körper 32, 62 und 84 thermisch stabilisiert sind, so daß durch Temperaturschwankungen keine die Gitterstruktur beeinflussenden Effekte auftreten können.

Ferner werden als bevorzugte Materialien, die sowohl für parametrische Einrichtung eingesetzt werden können als auch den piezoelektrischen Effekt zeigen, LiNbO₃, LiTaO₃, BaTiO₃ sowie hexagonale Nitride eingesetzt.

Die erfindungsgemäßen optischen wellenlängeneinstellbaren Elemente lassen sich in einer Vielzahl von Anwendungsfällen in der Datenübertragungstechnik einsetzen.

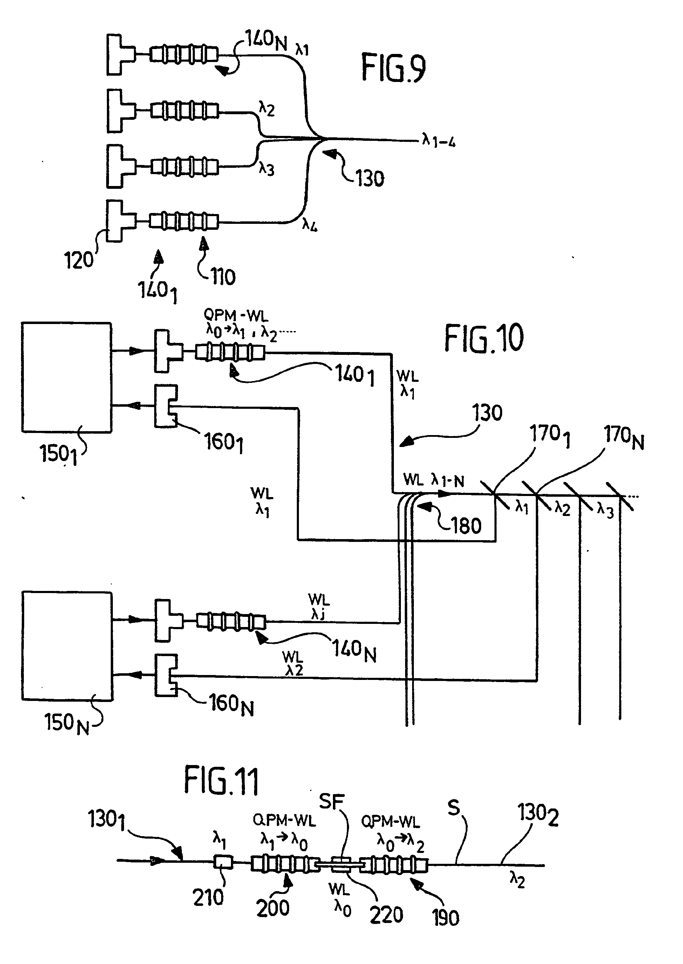

So ist, wie beispielsweise in Fig. 9 dargestellt, vorgesehen, ein erfindungsgemäßes optisches wellenlängeneinstellbares Element 110 so zu betreiben, daß ein Halbleiterlaser 120 mit seiner direkt erzeugbaren Wellenlänge λₒ die Summenfrequenzwelle SF erzeugt. Diese Summenfrequenzwelle SF kann beispielsweise bei Wellenlängen im Bereich zwischen 700 und 1000 Nanometer liegen, bevorzugte Werte sind Wellenlängen in der Größenordnung von 750 Nanometer oder 980 Nanometer.

Die jeweilige Signalwelle wird so gewählt, daß sie vorzugsweise in der Größenordnung von 1500 Nanometer liegt, da in diesem Wellenlängenbereich die optischen Datenübertragungsnetze arbeiten.

Die jeweilige, in ein Datenübertragungsnetz 130 eingespeiste Wellenlänge ist nun durch die Steuereinrichtung 50 hinsichtlich ihrer genauen Lage einstellbar, beispielsweise im Bereich zwischen 1400 Nanometer und 1600 Nanometer und zwar dadurch, daß die Ausdehnung der Gitterstruktur 22 mittels des jeweiligen Piezoelements 30, 60 oder 80 variiert wird.

Jede Einheit aus Halbleiterlaser 120 und optischem wellenlängeneinstellbarem Element 110 ist ein wellenlängeneinstellbarer Sender 140, wobei das Datenübertragungsnetz 130 von einer Vielzahl derartiger wellenlängeneinstellbarer Sender 140₁ bis 140_{N} gespeist werden kann.

Derartige wellenlängeneinstellbare Sender 140 lassen sich, wie in Fig. 10 dargestellt, zu einem Kommunikationsnetzwerk verbinden, wobei beispielsweise mehrere Rechner 150₁ bis 150_{N} jeweils einen derartigen wellenlängeneinstellbaren Sender 140₁ bis 140_{N} zugeordnet haben, sowie einen Empfänger 160₁ bis 160_{N}, wobei jeder derartige Empfänger mit einem wellenlängenselektiven Knoten 170₁, 170_{N} des Datenübertragungsnetzes 130 verbunden ist, während alle wellenlängeneinstellbare Sender 140₁, 140_{N} über Koppler 180 in das Datenübertragungsnetz 130 vor den wellenlängenselektiven Knoten 170₁, 170_{N} eingekoppelt werden, so daß durch die wellenselektiven Knoten 170₁ bis 170_{N} jeweils die Wellenlänge für den jeweiligen Rechner 150₁ bis 150_{N} ausgekoppelt wird, die diesem fest zugeordnet ist.

Dadurch, daß die Sender 140₁ bis 140_{N} nun wellenlängeneinstellbar sind, besteht die Möglichkeit, daß durch die jeweils einzustellende Wellenlänge des Senders 140₁ bis 140_{N} jeder der Rechner 150₁ bis 150_{N} mit jedem anderen der Rechner 150₁ bis 150_{N} kommunizieren kann, so daß ein sogenanntes optisches Routen möglich ist.

Ein weiterer Anwendungsfall eines optischen wellenlängeneinstellbaren Elements 190 ist in Fig. 11 dargestellt.

In diesem Anwendungsfall wird ein optisches Datenübertragungsnetz 130₁ mit einem zweiten optischen Datenübertragungsnetz 130₂ verbunden, wobei dies unter Änderung der für die Datenübertragung vorgesehenen Wellenlänge erfolgt.

Hierbei wird die im Datenübertragungsnetz 130₁ ankommende Information mit der Übertragungswellenlänge λ₁ von einem Frequenzumsetzer 200 auf eine Wellenlänge gebracht, die im Bereich der Summenfrequenzwellenlänge SF des erfindungsgemäßen optischen wellenlängeneinstellbaren Elements 190 liegt. Das Informationssignal mit der Wellenlänge der Summenfrequenzwelle SF wird in das erfindungsgemäßes optisch wellenlängeneinstellbares Element 190 eingekoppelt, bei welchem nunmehr durch Einstellung der Gitterstruktur 22 die Wellenlänge der Signalwelle S, die aus diesem austreten soll, einstellbar ist.

Die dann in das zweite Datenübertragungsnetz 130₂ eingekoppelt wird.

Vorzugsweise ist der Frequenzumsetzer 200 ebenfalls als erfindungsgemäßes optisches wellenlängeneinstellbares Element ausgebildet, wobei allerdings die eingekoppelte Lichtwelle der Signalwelle S entspricht und die ausgekoppelte Lichtwelle der Summenfrequenzwelle SF entspricht, insbesondere wenn auch die Idlerwelle I eingekoppelt wird.

Es besteht aber auch die Möglichkeit, für den Frequenzumsetzer 200 einen konventionellen Verdoppler einzusetzen.

Ferner ist vorzugsweise vorgesehen, daß entweder vor dem Frequenzumsetzer 200 ein Verstärker 210 vorgesehen ist, welcher bereits das mit der Wellenlänge λ₁ einfallende Signal vor der Frequenzumsetzung verstärkt und/oder zwischen dem Frequenzumsetzer 200 und dem erfindungsgemäßen optischen wellenlängeneinstellbaren Element 190 ein Verstärker 220 vorgesehen ist, welcher beispielsweise auf der Basis eines Halbleiterverstärkers arbeitet und Wellenlängen im Bereich der Wellenlänge der Summenfrequenzwelle SF verstärkt.

Der Vorteil dieser Lösung ist darin zu sehen, daß eine Übertragungs-Wellenlänge λ₁ im ersten Datenübertragungsnetzwerk 130₁ in eine frei wählbare Übertragungs-Wellenlänge λ₂ im zweiten Datenübertragungsnetzwerk 130₂ umsetzbar ist, so daß die Möglichkeit besteht, die mit der Übertragungs-Wellenlänge λ₁ ankommende Information in eine frei wählbare Wellenlänge λ₂ umzusetzen, wobei je nach Wellenlänge λ₂ das übertragene Signal einem speziellen Empfänger zugeordnet werden kann, wenn die jeweiligen Empfänger durch unterschiedliche Wellenlängen λ₂ ausgewählt ansprechbar sind.

## Patentansprüche

1. Wellenlängeneinstellbares optisches Element für die Datenübertragungstechnik, umfassend eine als optische parametrische Einrichtung mit Quasiphasenanpassung ausgebildete Wellenleiterstruktur (12), welche dazu ausgebildet ist, in der parametrischen Einrichtung miteinander wechselwirkende Lichtwellen (S, I, SF) zu führen, wobei die optische parametrische Einrichtung (12) hinsichtlich der Wellenlänge der miteinander wechselwirkenden Lichtwellen (S, I, SF) einstellbar ist, wobei
die Quasiphasenanpassung durch eine in ein Material der Wellenleiterstruktur (12) eingeprägte periodische Gitterstruktur (22) in der Wellenleiterstruktur (12) erfolgt, welche in Wellenleiterrichtung aufeinanderfolgende Bereiche (20a, 20b) mit variierenden nichtlinearen optischen Eigenschaften aufweist,
**dadurch gekennzeichnet dass**
die Ausdehnung der Gitterstruktur (22) in Wellenleiterrichtung (14) durch ein mit der Wellenleiterstruktur (12) mechanisch gekoppeltes Piezoelement (30, 60, 80) einstellbar ist und dass eine Steuereinrichtung (50) vorgesehen ist, mit welcher eine den gewünschten Wellenlängen der miteinander wechselwirkenden Lichtwellen (S, I, SF) entsprechende Spannung für das Piezoelement (30, 60, 80) erzeugbar ist.

2. Optisches Element nach Anspruch 1, **dadurch gekennzeichnet, dass** die Gitterstruktur (22) durch eine elektrische Polarisation des die Wellenleiterstruktur (12) bildenden Materials hergestellt ist.

3. Optisches Element nach Anspruch 1, **dadurch gekennzeichnet, dass** die Gitterstruktur (22) durch Eindiffusion von Stoffen in das die Wellenleiterstruktur (12) bildende Material hergestellt ist.

4. Optisches Element nach einem der voranstehenden Ansprüche, **dadurch gekennzeichnet, dass** das Piezoelement (30, 60, 80) unmittelbar auf den die Gitterstruktur (22) aufweisenden Bereich der Wellenleiterstruktur (12) wirkt.

5. Optisches Element nach einem der voranstehenden Ansprüche, **dadurch gekennzeichnet, dass** die Wellenleiterstruktur (12) in einem Substratkörper (10, 10', 10", 10'") angeordnet ist.

6. Optisches Element nach Anspruch 5, **dadurch gekennzeichnet, dass** die Wellenleiterstruktur (12) und das Piezoelement (30) einen zusammenhängenden Substratkörper (10, 10') aufweisen.

7. Optisches Element nach Anspruch 6, **dadurch gekennzeichnet, dass** der Substratkörper (10, 10') aus einem piezoelektrischen Material ist und zumindest mit einem Teilbereich einen piezoaktiven Körper (32) des Piezoelements (30) bildet.

8. Optisches Element nach Anspruch 7, **dadurch gekennzeichnet, dass** der den piezoaktiven Körper (32) bildende Teilbereich des Substratkörpers (10, 10') Elektroden (40, 44, 48) des Piezoelements (30) trägt.

9. Optisches Element nach einem der Ansprüche 6 bis 8, **dadurch gekennzeichnet, dass** der Substratkörper (10, 10') als einstückiger Körper ausgebildet ist.

10. Optisches Element nach einem der Ansprüche 1 bis 5, **dadurch gekennzeichnet, dass** das Piezoelement (60, 80) und die Wellenleiterstruktur (12) getrennte mechanisch miteinander gekoppelte Elemente sind.

11. Optisches Element nach einem der voranstehenden Ansprüche, **dadurch gekennzeichnet, dass** die Wellenleiterstruktur (12) mindestens endseitig mit dem Piezoelement (60, 80) gekoppelt ist.

12. Optisches Element nach einem der Ansprüche 5-9 in Verbindung mit Anspruch 11, **dadurch gekennzeichnet, dass** der die Wellenleiterstruktur (12) aufweisende Substratkörper (10'") mechanisch mit dem Piezoelement (60, 80) verbunden ist.

13. Optisches Element nach einem der Ansprüche 10 bis 12, **dadurch gekennzeichnet, dass** die Wellenleiterstruktur (12) über ihre Erstreckung in Wellenleiterrichtung (14) mechanisch mit dem Piezoelement (60, 80) verbunden ist.

14. Optisches Element nach einem der Ansprüche 10 bis 13, **dadurch gekennzeichnet, dass** das Piezoelement (80) einen Stapel von Piezozellen (82) umfasst, welcher sich in Wellenleiterrichtung (14) erstreckt.

15. Optisches Element nach einem der voranstehenden Ansprüche, **dadurch gekennzeichnet, dass** mindestens zwei Piezoelemente (30, 60) auf die Wellenleiterstruktur (12) zur Variation der Ausdehnung der Gitterstruktur (22) auf die Wellenleiterstruktur (12) einwirken.

16. Optisches Element nach einem der voranstehenden Ansprüche, **dadurch gekennzeichnet, dass** die mindestens zwei Piezoelemente (30, 60) von gegenüberliegenden Seiten auf die Wellenleiterstruktur (12) einwirken.

17. Optisches Element nach einem der voranstehenden Ansprüche, **dadurch gekennzeichnet, dass** von den miteinander wechselwirkenden Lichtwellen mindestens die Signalwelle (S) in einem für optische Datenübertragungsnetze (130) geeigneten Wellenlängenbereich liegt.

18. Optisches Element nach einem der voranstehenden Ansprüche, **dadurch gekennzeichnet, dass** von den miteinander wechselwirkenden Lichtwellen die Summenfrequenzwelle (SF) bei einer mit Halbleiterlasern (120) direkt erzeugbaren Wellenlänge liegt.

19. Optisches Element nach einem der voranstehenden Ansprüche, **dadurch gekennzeichnet, dass** von den miteinander wechselwirkenden Lichtwellen die Idlerwelle (I) außerhalb des für Datenübertragungsnetze (130) geeigneten Wellenlängenbereichs liegt.

20. Optisches Element nach einem der voranstehenden Ansprüche, **dadurch gekennzeichnet, dass** die parametrische Einrichtung (12) in einem ersten optischen Resonator (100, 102) für die Signalwelle (S) angeordnet ist.

21. Optisches Element nach einem der voranstehenden Ansprüche, **dadurch gekennzeichnet, dass** die parametrische Einrichtung (12) in einem zweiten optischen Resonator (100, 102) für die Idlerwelle (I) angeordnet ist.

22. Wellenlängeneinstellbarer optischer Sender für die Datenübertragungstechnik umfassend
ein optisches wellenlängeneinstellbares Element (110) nach einem der voranstehenden Ansprüche und einen mit einer festen Wellenlänge zur Erzeugung einer der in der parametrischen Einrichtung (12) wechselwirkenden Lichtwellen (S, I, SF) arbeitenden Halbleiterlaser (120).

23. Wellenlängeneinstellbarer Wellenlängenumsetzer für die Datenübertragungstechnik umfassend
einen mit einem ersten optischen Datenübertragungsnetz (130₁) in Verbindung stehenden Frequenzumsetzer (200) zur Erzeugung einer Summenfrequenzwellenlänge (SF) aus einer ersten ÜbertragungsWellenlänge (λ₁) und ein die Summenfrequenzwellenlänge (SF) empfangendes optisches wellenlängeneinstellbares Element (190) nach einem der Ansprüche 1 bis 21 zur Erzeugung der gewünschten einstellbaren zweiten Übertragungs-Wellenlänge (λ₂).

## Claims

1. Wavelength-tunable optical element for data transmission technology, comprising a waveguide structure (12) designed as an optical parametric device with quasi-phase matching, which is configured to guide light waves (S, I, SF) interacting with one another in the parametric device, the optical parametric device (12) being tunable with respect to the wavelength of the light waves (S, I, SF) interacting with one another, the quasi-phase matching being effected by a periodic grating structure (22) in the waveguide structure (12), which is impressed in a material of the waveguide structure (12) and comprises regions (20a, 20b) with varying non-linear optical properties following one another in waveguide direction, **characterized in that** the expanse of the grating structure (22) in waveguide direction (14) is adjustable by a piezoelectric element (30, 60, 80) which is mechanically coupled to the waveguide structure (12), and **in that** a control device (50) is provided for generating a voltage for the piezoelectric element (30, 60, 80), which corresponds to the desired wavelengths of the light waves (S, I, SF) interacting with one another.

2. Optical element in accordance with claim 1, **characterized in that** the grating structure (22) is produced by an electric polarization of the material forming the waveguide structure (12).

3. Optical element in accordance with claim 1, **characterized in that** the grating structure (22) is produced by diffusion of substances into the material forming the waveguide structure (12).

4. Optical element in accordance with any one of the preceding claims, **characterized in that** the piezoelectric element (30, 60, 80) acts directly on the region of the waveguide structure (12) comprising the grating structure (22).

5. Optical element in accordance with any one of the preceding claims, **characterized in that** the waveguide structure (12) is arranged in a substrate body (10, 10', 10", 10"').

6. Optical element in accordance with claim 5, **characterized in that** the waveguide structure (12) and the piezoelectric element (30) comprise a coherent substrate body (10, 10').

7. Optical element in accordance with claim 6, **characterized in that** the substrate body (10, 10') is made of a piezoelectric material and forms at least with a partial area thereof a piezoactive body (32) of the piezoelectric element (30).

8. Optical element in accordance with claim 7, **characterized in that** the partial area of the substrate body (10, 10') forming the piezoactive body (32) carries electrodes (40, 44, 48) of the piezoelectric element (30).

9. Optical element in accordance with any one of claims 6 to 8, **characterized in that** the substrate body (10, 10') is configured as an integral body.

10. Optical element in accordance with any one of claims 1 to 5, **characterized in that** the piezoelectric element (60, 80) and the waveguide structure (12) are separate elements which are mechanically coupled to each other.

11. Optical element in accordance with any one of the preceding claims, **characterized in that** the waveguide structure (12) is coupled at least at its ends to the piezoelectric element (60, 80).

12. Optical element in accordance with any one of claims 5 to 9 in combination with claim 11, **characterized in that** the substrate body (10"') comprising the waveguide structure (12) is mechanically connected to the piezoelectric element (60, 80).

13. Optical element in accordance with any one of claims 10 to 12, **characterized in that** the waveguide structure (12) is mechanically connected to the piezoelectric element (60, 80) over its expanse in waveguide direction (14).

14. Optical element in accordance with any one of claims 10 to 13, **characterized in that** the piezoelectric element (80) comprises a stack of piezoelectric cells (82), which extends in waveguide direction (14).

15. Optical element in accordance with any one of the preceding claims, **characterized in that** at least two piezoelectric elements (30, 60) act on the waveguide structure (12) in order to vary the expanse of the grating structure (22) on the waveguide structure (12).

16. Optical element in accordance with any one of the preceding claims, **characterized in that** the at least two piezoelectric elements (30, 60) act on the waveguide structure (12) from opposite sides.

17. Optical element in accordance with any one of the preceding claims, **characterized in that** of the light waves interacting with one another at least the signal wave (S) lies in a wavelength range which is suitable for optical data transmission networks (130).

18. Optical element in accordance with any one of the preceding claims, **characterized in that** of the light waves interacting with one another the sum frequency wave (SF) lies at a wavelength which can be directly generated with semiconductor lasers (120).

19. Optical element in accordance with any one of the preceding claims, **characterized in that** of the light waves interacting with one another the idler wave (I) lies outside of the wavelength range which is suitable for data transmission networks (130).

20. Optical element in accordance with any one of the preceding claims, **characterized in that** the parametric device (12) is arranged in a first optical resonator (100, 102) for the signal wave (S).

21. Optical element in accordance with any one of the preceding claims, **characterized in that** the parametric device (12) is arranged in a second optical resonator (100, 102) for the idler wave (I).

22. Wavelength-tunable optical transmitter for data transmission technology, comprising
an optical wavelength-tunable element (110) in accordance with any one of the preceding claims and a semiconductor laser (120) operating with a fixed wavelength for generation of one of the light waves (S, I, SF) interacting in the parametric device (12).

23. Wavelength-tunable wavelength converter for data transmission technology, comprising
a frequency converter (200) in communication with a first optical data transmission network (130₁) for generation of a sum frequency wavelength (SF) from a first transmission wavelength (λ₁), and an optical wavelength-tunable element (190) receiving the sum frequency wavelength (SF) in accordance with any one of claims 1 to 21 for generation of the desired second tunable transmission wavelength (λ₂).

## Revendications

1. Elément optique à longueur d'onde réglable pour technologies de transmission de données, comprenant une structure de guide d'ondes (12) réalisée en tant que dispositif optique paramétrique avec quasi accord de phase, laquelle est mise au point pour guider des ondes lumineuses (S, I, SF) à interaction commune dans le dispositif paramétrique, le dispositif optique paramétrique (12) pouvant être réglé concernant la longueur d'onde des ondes lumineuses (S, I, SF) à interaction commune, sachant que le quasi accord de phase s'effectue grâce à une structure de réseau périodique (22) incrustée dans une matière de la structure de guide d'ondes (12) dans la structure de guide d'ondes (12) laquelle présente, en direction du guide d'ondes, des zones successives (20a, 20b) avec des propriétés optiques variables non linéaires,
**caractérisé en ce que** l'étendue de la structure de réseau (22) en direction du guide d'ondes (14) est réglable grâce à un élément piézoélectrique (30, 60, 80) couplé mécaniquement avec la structure de guide d'ondes (12), et **en ce qu'**un dispositif de commande (50) est prévu, avec lequel il est possible de générer une tension pour l'élément piézoélectrique (30, 60, 80) laquelle correspond aux longueurs d'ondes souhaitées des ondes lumineuses à interaction commune (S, I, SF).

2. Elément optique selon la revendication 1, **caractérisé en ce que** la structure de réseau (22) est réalisée grâce à une polarisation électrique de la matière formant la structure de guide d'ondes (12).

3. Elément optique selon la revendication 1, **caractérisé en ce que** la structure de réseau (22) est réalisée grâce à une diffusion en profondeur de substances dans la matière formant la structure de guide d'ondes (12).

4. Elément optique selon l'une quelconque des revendications précédentes,
**caractérisé en ce que** l'élément piézoélectrique (30, 60, 80) agit directement sur la zone de la structure de guide d'ondes (12) qui présente la structure de réseau (22).

5. Elément optique selon l'une quelconque des revendications précédentes,
**caractérisé en ce que** la structure de guide d'ondes (12) est disposée dans un corps de substrat (10, 10', 10", 10"').

6. Elément optique selon la revendication 5, **caractérisé en ce que** la structure de guide d'ondes (12) et l'élément piézoélectrique (30) présentent un corps de substrat (10, 10') connexe.

7. Elément optique selon la revendication 6, **caractérisé en ce que** le corps de substrat (10, 10') est formé en une matière piézoélectrique et forme, au moins avec une zone partielle, un corps piézoactif (32) de l'élément piézoélectrique (30).

8. Elément optique selon la revendication 7, **caractérisé en ce que** la zone partielle formant le corps piézoactif (32) du corps de substrat (10, 10') porte des électrodes (40, 44, 48) de l'élément piézoélectrique (30).

9. Elément optique selon l'une quelconque des revendications 6 à 8, **caractérisé en ce que** le corps de substrat (10, 10') est réalisé en tant que corps d'une seule pièce.

10. Elément optique selon l'une quelconque des revendications 1 à 5, **caractérisé en ce que** l'élément piézoélectrique (60, 80) et la structure de guide d'ondes (12) sont des éléments distincts couplés ensembles mécaniquement.

11. Elément optique selon l'une des revendications précédentes, **caractérisé en ce que** la structure de guide d'ondes (12) est couplée, au moins du côté d'extrémité, avec l'élément piézoélectrique (60, 80).

12. Elément optique selon l'une des revendications 5-9 en combinaison avec la revendication 11, **caractérisé en ce que** le corps de substrat (10"') présentant la structure de guide d'ondes (12) est en liaison mécanique avec l'élément piézoélectrique (60, 80).

13. Elément optique selon l'une quelconque des revendications 10 à 12, **caractérisé en ce que** la structure de guide d'ondes (12), sur son étendue en direction du guide d'ondes (14), est en liaison mécanique avec l'élément piézoélectrique (60, 80).

14. Elément optique selon l'une des revendications 10 à 13, **caractérisé en ce que** l'élément piézoélectrique (80) comprend une pile de cellules piézoélectriques (82), laquelle s'étend en direction du guide d'ondes (14).

15. Elément optique selon l'une quelconque des revendications précédentes,
**caractérisé en ce que** des éléments piézoélectriques (30, 60), au moins au nombre de deux, agissent sur la structure de guide d'ondes (12) pour faire varier l'étendue de la structure de réseau (22) sur la structure de guide d'ondes (12).

16. Elément optique selon l'une des revendications précédentes, **caractérisé en ce que** les éléments piézoélectriques (30, 60), au moins au nombre de deux, agissent sur la structure de guide d'ondes (12) à partir de côtés situés en vis-à-vis.

17. Elément optique selon l'une des revendications précédentes, **caractérisé en ce que**, parmi les ondes lumineuses à interaction commune, au moins l'onde de signal (S) se situe dans une plage de longueurs d'ondes adéquate pour des réseaux optiques de transmission de données (130).

18. Elément optique selon l'une des revendications précédentes, **caractérisé en ce que**, parmi les ondes lumineuses à interaction commune, l'onde de fréquence somme (SF) présente une longueur d'onde pouvant être générée directement avec des lasers à semi-conducteur (120).

19. Elément optique selon l'une des revendications précédentes, **caractérisé en ce que**, parmi les ondes lumineuses à interaction commune, l'onde conjuguée (I) se situe en-dehors de la plage des longueurs d'onde qui convient au réseau de transmission de données (130).

20. Elément optique selon l'une des revendications précédentes, **caractérisé en ce que** le dispositif paramétrique (12) est disposé dans un premier résonateur optique (100, 102) pour l'onde de signal (S).

21. Elément optique selon l'une des revendications précédentes, **caractérisé en ce que** le dispositif paramétrique (12) est disposé dans une deuxième résonateur optique (100, 102) pour l'onde conjuguée (I).

22. Emetteur optique à longueur d'onde réglable pour technologies de transmission de données, comprenant
un élément optique à longueur d'onde réglable (110) selon l'une des revendications précédentes et un laser à semi-conducteur (120) fonctionnant avec une longueur d'onde fixe pour générer l'une parmi les ondes lumineuses (S, I, SF) à interaction dans le dispositif paramétrique (12).

23. Convertisseur de longueurs d'ondes à longueur d'onde réglable pour technologies de transmission de données, comprenant
un convertisseur de fréquences (200) en liaison avec un premier réseau de transmission de données optique (130₁) pour générer une longueur d'onde de fréquence somme (SF) à partir d'une première longueur d'onde de transmission (λ₁) et un élément optique à longueur d'onde réglable (190) réceptionnant la longueur d'onde de fréquence somme (SF) selon l'une des revendications 1 à 21 pour générer la deuxième longueur d'onde (λ₂) de transmission réglable souhaitée.
